# EUROPEAN PATENT SPECIFICATION

(11) **EP 4 254 586 B1**
(45) Date of publication and mention of the grant of the patent: **29.04.2026**
(21) Application number: 22776039.4
(22) Date of filing: 22.03.2022
(51) Int. Cl.: H01M 10/058, H01M 50/586, H01M 50/595, H01M 10/04, H01M 50/46, H01M 50/463, H01M 50/103, H01M 50/105, H01M 50/466, H01M 10/0583

(54) **ELECTRODE ASSEMBLY AND SECONDARY BATTERY INCLUDING SAME**
ELEKTRODENANORDNUNG UND SEKUNDÄRBATTERIE DAMIT
ENSEMBLE ÉLECTRODE ET BATTERIE SECONDAIRE LE COMPRENANT

(30) Priority: 22.03.2021 KR 20210036922
(43) Date of publication of application: 04.10.2023
(73) Proprietor: LG Energy Solution, Ltd., Seoul 07335 (KR)
(72) Inventor: PARK, Suhan, Daejeon 34122 (KR); LEE, Younghwan, Daejeon 34122 (KR)
(74) Representative: Plasseraud IP
(86) International application number: PCT/KR2022/003956
(87) International publication number: WO 2022/203338

(56) References cited:
- EP-B1- 2 874 225
- JP-A- 2010 062 109
- JP-A- 2019 179 654
- JP-B2- 5 017 754
- KR-A- 20070 073 169
- KR-A- 20130 111 697
- KR-A- 20180 050 133
- US-A1- 2020 411 909

## Description

### [TECHNICAL FIELD]

### Cross Citation with Related Application(s)

This application claims the benefit of Korean Patent Application No. 10-2021-0036922 filed on March 22, 2021 with the Korean Intellectual Property Office.

The present disclosure relates to an electrode assembly and a secondary battery including the same, and more particularly, to an electrode assembly and a secondary battery that can improve the safety of secondary batteries even under a high-temperature and heat-shrinkage environment of the separator.

### [BACKGROUND]

Along with the technology development and increased demand for mobile devices, demand for secondary batteries as energy sources has been increasing rapidly. Accordingly, many researches on secondary batteries that can meet various demands are being conducted. A secondary battery has attracted considerable attention as an energy source for power-driven devices, such as an electric bicycle, an electric vehicle, and a hybrid electric vehicle, as well as an energy source for mobile devices, such as a cellular phone, a digital camera, and a laptop computer.

A small-sized device such as a cellular phone, a camera, or the like uses a small-sized battery pack in which one battery cell is packed. However, a middle or large-sized device such as a laptop computer, an electric vehicle, or the like uses a middle or large-sized battery pack in which a battery pack consisting of two or more battery cells connected in parallel and/or in series is packed.

In the case of the lithium secondary battery, there is a problem that it has excellent electrical characteristics, while it is low in safety. For example, the lithium secondary battery causes decomposition reactions of active materials, electrolytes and the like, which are battery constituent elements, to thereby generate heat and gas. The high-temperature and high-pressure conditions resulting therefrom can further promote the decomposition reaction to cause ignition or explosion.

In a more specific example, in a conventional electrode assembly and a prismatic or pouch-type secondary battery including the same, there are many cases in which separators included in the electrode assembly are thermally contracted under exposure to a high-temperature environment. Due to the thermal contraction of the separator, a cathode and an anode may directly face each other, causing an electrical short circuit. As a result, the lithium secondary battery may cause ignition, explosion or the like.

Document US 2020/411909 A1 shows an electrode assembly with a cathode plate and an opposite anode plate extending along a longitudinal direction and two separators disposed adjacent to each other with the cathode plate or the anode plate interposed therebetween. The at least one end of the first separator and the at least one end of the second separator is folded so as to wrap the cathode plate or the anode plate. The electrode assembly further comprises an insulating tape covering the folded part of the first separator and the folded part of the second separator

In particular, in recent years, as lithium secondary battery is made high in capacity and voltage, for example, a cathode active material containing nickel at a high content of 60% by weight or more is widely used. The cathode active material containing such a high content of nickel has a high heating value and a low structural collapse temperature and thus, is relatively low in thermal stability. Therefore, the issues related to the safety of the above-mentioned secondary battery, particularly, the high-temperature safety, are becoming more prominent.

Due to such disadvantages of the conventional electrode assembly, there is a continuous need to develop a technology that can enhance the safety of the secondary battery even under a high-temperature heat-shrinkable environment of the separator.

### [DETAILED DESCRIPTION OF THE INVENTION]

### [Technical Problem]

It is an object of the present disclosure to provide an electrode assembly can improve the safety of secondary batteries even under a high-temperature and heat-shrinkage environment of the separator, and a secondary battery including the same.

### [Technical Solution]

The invention is defined by the claims.

According to one aspect of the present disclosure, there is provided an electrode assembly comprising:
a cathode plate,
an anode plate corresponding to the cathode plate, and
first and second separators that are disposed adjacent to each other with the cathode plate or the anode plate interposed therebetween,
wherein at least one end of the first separator is adhered to at least one end of the second separator along the longitudinal direction of the cathode plate and the anode plate,
wherein at least one end of the first and second separators is folded so as to wrap the cathode plate or the anode plate, and
wherein the electrode assembly further comprises an insulating tape covering the folded part of the first and second separators.

According to one aspect of the present disclosure, there is provided a secondary battery comprising: the electrode assembly, and
a battery case for housing the electrode assembly.

### [Advantageous Effects]

In the electrode assembly of the present disclosure, the separators added between the cathode plate and the anode plate stacked on each other are adhered to each other, and folded so as to wrap the cathode plate and the anode plate, and an insulating tape is covered around them.

As a result, even when the electrode assembly and the secondary battery are exposed to a high-temperature environment or the like, a phenomenon in which the separator is thermally contracted to cause an electrical short circuit between the cathode plate and the anode plate can be minimized. Therefore, even if a cathode active material or the like containing a high content of nickel is applied, it is possible to minimize the ignition, explosion or the like of the secondary battery and thus maximize the safety of the lithium secondary battery.

In addition, as the mutually adhered separators are folded so as to wrap the cathode plate and the anode plate, the process of inserting the electrode assembly into a pouch-type battery case or the like can be performed more smoothly.

Therefore, the present disclosure provides a secondary battery with high capacity and high energy density by applying a cathode active material or the like containing a high content of nickel, and also can improve the safety and processability of such secondary battery and thus can greatly contribute to the provision of high-quality secondary battery.

### [BRIEF DESCRIPTION OF THE DRAWINGS]

Fig. 1 is a perspective view which schematically shows an electrode assembly according to an embodiment of the present disclosure;
Fig. 2 is a plan view which schematically shows an electrode-separator laminate for manufacturing an electrode assembly according to an embodiment of the present disclosure;
Figs. 3a and 3b are plan views which schematically show an electrode assembly according to embodiments of the present disclosure; and
Fig. 4a is a cross-sectional view which schematically shows an electrode assembly according to embodiments of the present disclosure, and Fig. 4b is an enlarged cross-sectional view of folded parts of the first and second separators indicated by a circle in Figs. 3a, 3b and 4a.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

Further, throughout the description, when referred to as "planar (or plane view)", it means when a target portion is viewed from the upper side, and when referred to as "cross-sectional (or cross-sectional view)", it means when a target portion is viewed from the side of a cross section cut vertically.

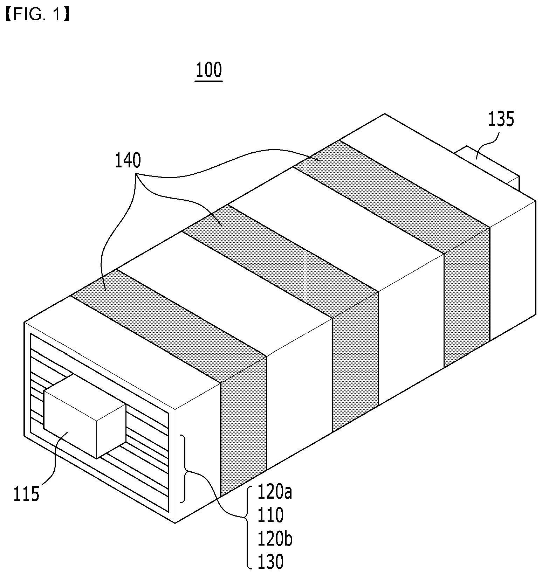

Figs. 1, 3a, 3b, and 4a show a perspective view, a plan view, and a cross-sectional view of an electrode assembly according to embodiments of the present disclosure, respectively.

As shown in these Figs. 1, 3a, 3b and 4a, according to one embodiment of the disclosure, there is provided an electrode assembly 100 comprising:
a cathode plate 110,
an anode plate 130 corresponding to the cathode plate 110, and
first and second separators 120a and 120b disposed adjacent to each other with the cathode plate 110 or the anode plate 130 interposed therebetween,
wherein at least one end of the first separator 120a is adhered to at least one end of the second separator 120b along the longitudinal direction of the cathode plate 110 and the anode plate 130,
wherein at least one end of the first and second separators 120a and 120b is folded so as to wrap the cathode plate 110 or the anode plate 130, and
wherein the electrode assembly 100 further comprises an insulating tape 140 covering the folded part of the first and second separators 120a and 120b.

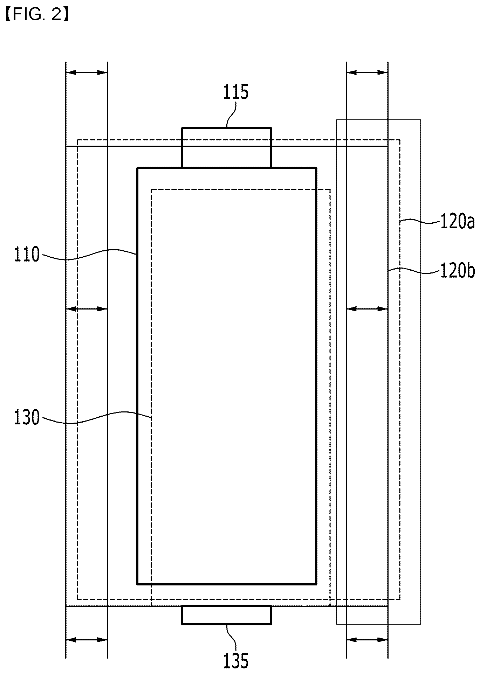

The electrode assembly 100 of the one embodiment includes a stack-type electrode-separator laminate in which basically, the cathode plate 110 and the anode plate 130 are alternately stacked with each other, and the first and second separators 120a and 120b are respectively formed between the alternately stacked cathode plate 110 and anode plate 130. Referring to Fig. 2, in this stack-type electrode-separator laminate, the first and second separators 120a and 120b are formed/arranged so as to have a width larger than that of the cathode plate 110 and the anode plate 130 (part indicated by a square on the right side in Fig. 2).

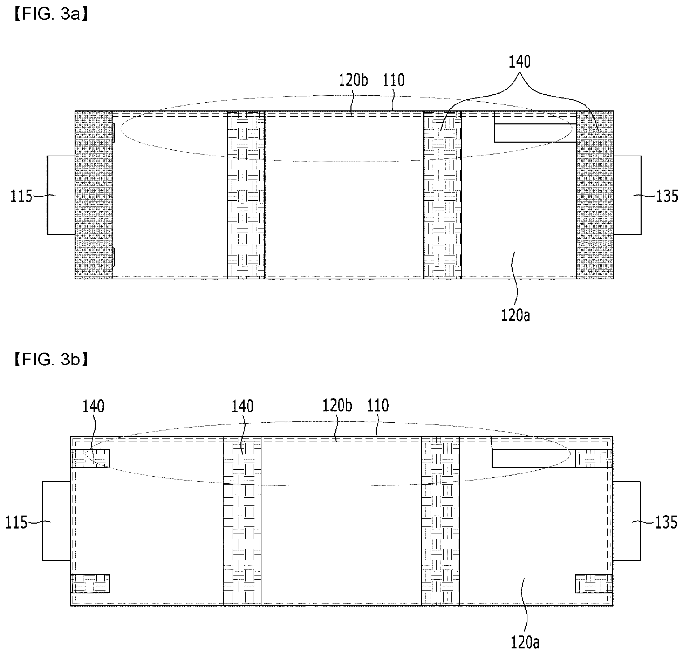

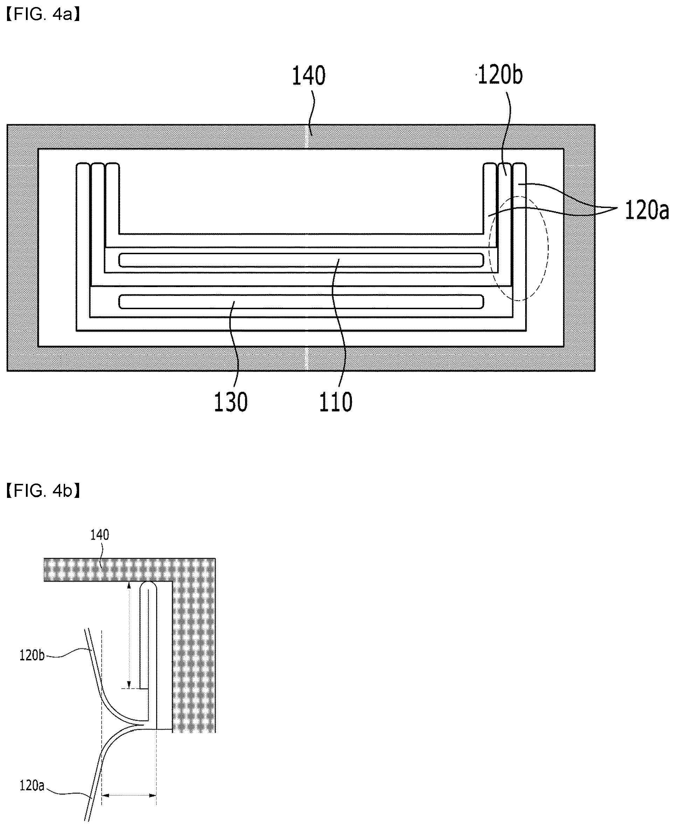

Further, as shown in Figs. 3a, 3b and 4a, at least one end of the first separator 120a and the second separator 120b disposed adjacent to each other is adhered to each other along the longitudinal direction of the cathode plate 110 and the anode plate 130, and the mutual adhesive portions of the first and second separators 120a and 120b are folded so as to wrap the cathode plate 110 and/or the anode plate 130 (part indicated by a circle in Figs. 3a, 3b and 4a).

In addition, an insulating tape 140 is formed so as to wrap around the cathode plate 110 and the anode plate 130 along the width direction perpendicular to the longitudinal direction, while covering the folded parts of the first and second separators 120a and 120b.

In this manner, the electrode assembly 100 of one embodiment has three types of separator-fixing structures in which at least one end of the first and second separators 120a and 120b adjacent to each other are adhered to each other, they are folded around the cathode plate 110 and the anode plate 130, and an insulating tape 140 is formed around the folded parts of the first and second separators 120a and 120b and the electrode plates 110 and 130.

Due to the fixing structure of the first and second separators 120a and 120b and the fixing force therefrom, even if the electrode assembly 100 and the secondary battery are exposed to a high temperature environment or the like, or heat generation or the like occurs from the cathode active material, the thermal contraction forces of the first and second separators 120a and 120b are cancelled, so that the first and second separation membranes 120a and 120b cannot be thermally contracted. As a result, a phenomenon in which the cathode plate 110 and the anode plate 130 come into contact with each other due to the thermal contraction of these separators and cause electrical short circuit can be minimized. In particular, comparing with an electrode assembly in which the first and second separators are simply formed to have a width larger than that of each electrode plate to improve battery safety, the electrode assembly of an embodiment having the above-mentioned fixing structure of the separator can further significantly reduce thermal contraction of each separator and electrical short circuit of the electrode plates resulting therefrom.

Therefore, when the electrode assembly of one embodiment is applied, it can minimize ignition, explosion or the like of the secondary battery and greatly improve the safety of the secondary battery, especially a lithium secondary battery with high capacity and high energy density to which a cathode active material containing a high content of nickel is applied. In addition, as the first and second separators 120a and 120b adhered to each other are folded so as to wrap the cathode plate 110 and the anode plate 130, the process of inserting the electrode assembly 100 into a pouch-type battery case can also be made more smoothly.

Meanwhile, in the electrode assembly 100 of the above-mentioned embodiment, each of the cathode plate 110 and the anode plate 130 may include an electrode current collector; an electrode active material layer formed on the electrode current collector; and electrode tabs 115 and 135 formed so as to protrude from the electrode current collector.

Among them, the electrode current collector (i.e., cathode current collector) included in the cathode plate 110 may generally have a thickness of 3 to 500 µm. Such cathode current collector is not particularly limited as long as it has conductivity while not causing chemical changes to the secondary battery, and for example, stainless steel, aluminum, nickel, titanium, calcined carbon, or aluminum or stainless steel having a surface treated with carbon, nickel, titanium, silver, and the like can be used.

The electrode active material layer (i.e., cathode active material layer) of the cathode plate 110 includes a cathode active material, and examples of the cathode active material include a layered compound such as lithium cobalt oxide (LiCoO₂), lithium nickel oxide (LiNiO₂), or a compound substituted with one or more transition metals; lithium manganese oxides such as chemical formulae Li_{1+y}Mn_{2-y}O₄ (where y is 0 to 0.33), LiMnO₃, LiMn₂O₃, LiMnO₂; lithium copper oxide (Li₂CuO₂); vanadium oxides such as LiV₃O₈, LiFe₃O₄, V₂O₅, and Cu₂V₂O₇; a Ni-site type lithium nickel oxide represented by chemical formula LiNi_{1-y}M_{y}O₂ (where M=Co, Mn, Al, Cu, Fe, Mg, B or Ga, and y=0.01 to 0.3); lithium manganese composite oxide represented by chemical formulae LiMn_{2-y}M_{y}O₂ (where M=Co, Ni, Fe, Cr, Zn or Ta, y=0.01 to 0.1) or Li₂Mn₃MO₈ (where, M=Fe, Co, Ni, Cu or Zn); LiMn₂O₄ in which a part of Li in the chemical formula is substituted with an alkaline earth metal ion; a disulfide compound; Fe₂(MoO₄)₃, and the like, without being limited thereto.

However, when applying a lithium transition metal composite oxide-based positive electrode active material that contains 60% by weight or more, or 60 to 99% by weight of nickel, safety problems such as ignition, heat, or explosion of secondary batteries may occur more significantly, whereby the structure of the electrode assembly according to the embodiment of the present disclosure can be more preferably applied for the electrode assembly and the secondary battery including the cathode active material.

Meanwhile, the cathode active material layer can be produced by applying the cathode mixture containing a mixture of the cathode active material, the conductive material and the binder onto the remaining portion excluding the region where the cathode tab 115 is formed on the cathode current collector, followed by drying and rolling, and if necessary, a filler may be further added to the mixture. However, since the composition and formation method of the cathode active material layer may follow the composition and method of the active material layer included in a general lithium secondary battery, an additional description thereof will be omitted.

Meanwhile, the electrode current collector (i.e., anode current collector) included in the anode plate 130 may generally be manufactured to have a thickness of 3 to 500 micrometers. The anode current collector is not particularly limited as long as it has high conductivity without causing a chemical change to the battery including the electrode assembly, and for example, copper, stainless steel, an aluminum-cadmium alloy, or the like can be used.

In addition, the electrode active material layer (i.e., anode active material layer) of the anode plate 130 includes an anode active material, and the anode active material may include, for example, carbons such as hardly graphitizable carbon and graphite-based carbon; metal composite oxides such as LiₓFeO₃(0≤x≤1), LiₓWO₂(0≤x≤1), SnₓMe₁₋ₓMe'_{y}O_{z}(Me: Mn, Fe, Pb, Ge; Me': Al, B, P, Si, Group 1, 2, 3 elements in the periodic table, halogen; 0<x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Sb₂O₄, Sb₂O₅, GeO, GeO₂, Bi₂O₃, Bi₂O₄ or Bi₂O₅; a conductive polymer such as polyacetylene; Li-Co-Ni based materials and the like.

Such an anode active material layer can be produced by applying the anode mixture containing a mixture of the anode active material, the conductive material and the binder onto the remaining portion excluding the region where the anode tab 135 is formed on the anode current collector, followed by drying and rolling, and if necessary, a filler may be further added to the mixture. The composition and formation method of such anode active material layer may follow general composition and method.

As shown in Fig. 2, in the manufacturing process of the electrode assembly 100 of one embodiment, a stack-type electrode-separator laminate is formed in which the cathode plate 110 and the anode plate 130 described above are alternately stacked with each other, first and second separators 120a and 120b having larger widths are respectively formed between the alternately stacked cathode plate 110 and anode plate 130, first and second separators 120a and 120b having larger widths are respectively formed to electrically insulate between the cathode plate 110 and the anode plate 130.

In such an electrode-separator laminate, the cathode plate 110 and the anode plate 130 adjacent to each other are in physical contact with the first and second separators 120a and 120b therebetween (for reference, Fig. 2 shows that the cathode plate 110, the anode plate 130, and the first and second separators 120a and 120b are spaced apart from each other, but this is for convenience of illustration). At this time, the first and second separators 120a and 120b may be in physical contact only with the cathode plate 110 or the anode plate 130 facing them, but they may be adhered to the facing cathode plate 110 or anode plate 130. Thereby, when the electrode assembly 100 and the secondary battery are exposed to a high temperature environment, and the like, the thermal contraction force of the first and second separators 120a and 120b can be further cancelled to thereby further minimize the thermal contraction phenomenon of the separator.

In the electrode-separator laminate and the electrode assembly 100 produced therefrom, an insulating thin film having high ion permeability, mechanical strength, and low contraction characteristics can be used as the first and second separators 120a and 120b. For example, a sheet or a nonwoven fabric made from an olefin-based polymer such as chemical resistant and hydrophobic polypropylene, glass fiber, or polyethylene can be used.

Meanwhile, in the electrode-separator laminate, the first separator 120a and the second separator 120b adjacent to each other may be formed so that at least one end or both ends thereof can be adhered to each other along the longitudinal direction of the cathode plate 110 and the anode plate 130 (part indicated by a square in Fig. 2, and indicated by a circle in Figs. 3a, 3b and 4). At this time, in order to more effectively suppress the thermal contraction of the first and second separators 120a and 120b, it is more preferable that both ends of the first and second separators 120a and 120b are adhered along the longitudinal direction of the electrode plates 110 and 130.

For mutual adhesion of the first and second separators 120a and 120b, the binder included in the first and second separators 120a and 120b itself may be heat-sealed, but according to alternative embodiments, an adhesive can be added to the contact parts of the first and second separators 120a and 120b adjacent to each other. As such an adhesive, for example, a hot melt adhesive including ethylene vinyl acetate, polyurethane, or a mixture thereof can be used, but is not particularly limited thereto.

Further, in the electrode assembly 100 of one embodiment, at least one end or both ends of the first and second separators 120a and 120b adhered to each other can be folded so as to wrap the cathode plate 110 and/or the anode plate 130 (part indicated by a circle in Figs. 3a, 3b and 4a). At this time, one end or both ends of the first and second separators 120a and 120b adhered to each other can be folded only once so as to wrap the cathode plate 110 and/or the anode plate 130, but it can be doubly folded as shown in Fig. 4b.

Due to such doubly folded structure, high-temperature thermal contraction of the separator can be more effectively suppressed, making the shape of the electrode assembly 100 more compact, and thus the process of inserting it into a pouch-type battery case or the like can be made more smoothly.

On the other hand, in the electrode assembly 100 described above, on the folded parts of the first and second separators 120a and 120b, an insulating tape 140 is formed so as to wrap the cathode plate 110 and the anode plate 130 in the width direction perpendicular to the length direction, while covering the folded parts of these separators. As shown in Figs. 1, 3a and 3b, the insulating tape 140 may be attached in plural at regular intervals so as to wrap around the folded part of the separator, the cathode plate 110 and the anode plate 130. In addition, referring to Fig. 3b, in addition to these insulating tapes 140, more insulating tape 140 may be further attached so as to further wrap around the cathode plate 110 and the anode plate 130 around the protrusion parts of the electrode tabs 115 and 135.

By the addition of the insulating tape 140, the high-temperature thermal contraction of the separator can be further suppressed, and the safety of the secondary battery can be further improved.

The type of the insulating tape 140 is not particularly limited, but for example, a polyimide-based insulating tape or a polyester-based insulating tape (e.g., PET or PEN-based insulating tape) can be used.

The above-mentioned electrode assembly may be housed in a battery case, for example, in a state impregnated in an electrolyte, to constitute a secondary battery. At this time, the electrode assembly may include a stack-type electrode-separator laminate, and may be mainly housed in a pouch-type battery case or a prismatic battery case.

At this time, as the battery case, a general battery case applied to a pouch-type or prismatic secondary battery can be used.

Further, an electrode assembly and a secondary battery including the same can be applied to various devices. Such a device may be applied to a vehicle means such as an electric bicycle, an electric vehicle, or a hybrid vehicle, but the present disclosure is not limited thereto, and is applicable to various devices that can use an electrode assembly and a secondary battery including the same, which also falls under the scope of the present disclosure.

### * Description of Reference Numerals

100: electrode assembly
110: electrode plate (cathode plate)
115: electrode tab (cathode tab)
120a, 120b: first and second separators
130: electrode plate (anode plate)
135: electrode tab (anode tab)
140: insulation tape

## Claims

1. An electrode assembly (100) comprising:
a cathode plate (110),
an anode plate (130) corresponding to the cathode plate (110), and
first and second separators (120a, 120b) that are disposed adjacent to each other with the cathode plate (110) or the anode plate (130) interposed therebetween,
wherein at least one end of the first separator (120a) is adhered to at least one end of the second separator (120b) along the longitudinal direction of the cathode plate (110) and the anode plate (130),
wherein the at least one end of the first separator (120a) and the at least one end of the second separator (120b) is folded so as to wrap the cathode plate (110) or the anode plate (130),
wherein the electrode assembly (100) further comprises an insulating tape (140) covering the folded part of the first separator (120a) and the folded part of the second separator (120b) , and
wherein the at least one end of the first separator (120a) and the at least one end of the second separator (120b) adhered to each other are doubly folded.

2. The electrode assembly (100) according to claim 1, wherein each of the cathode plate (110) and the anode plate (130) each comprises,
an electrode current collector;
an electrode active material layer formed on the electrode current collector; and
an electrode tab (115, 135) formed so as to protrude from the electrode current collector.

3. The electrode assembly (100) according to claim 1, wherein the first and second separators (120a, 120b) have a width larger than that of the cathode plate (110) and the anode plate (135).

4. The electrode assembly (100) according to claim 1, wherein the first and second separators (120a, 120b) are adhered to the facing cathode plate (110) or the facing anode plate (130).

5. The electrode assembly (100) according to claim 1, wherein both ends of the first separator (120a) are adhered to both ends of the second separator (120b) along the longitudinal direction of the cathode plate (110) and the anode plate (130), and
both ends of the first separator (120a) and both ends of the second separator (120b) are folded so as to wrap the cathode plate (110) or the anode plate (130).

6. The electrode assembly (100) according to claim 1 or 2, wherein the insulating tape (140) is formed so as to wrap around the cathode plate (110) and the anode plate (130) along a width direction perpendicular to the longitudinal direction, while covering the folded part of the first separator (120a) and the folded part of the second separator (120b).

7. The electrode assembly (100) according to claim 2, wherein the insulating tape (140) is formed so as to further wrap around the cathode plate (110) and the anode plate (130) around the electrode tab (115).

8. A secondary battery comprising:
the electrode assembly (100) according to any one of claims 1 to 7, and
a battery case for housing the electrode assembly (100) .

9. The secondary battery according to claim 8, wherein the battery case is a pouch-type battery case or a prismatic battery case.

## Patentansprüche

1. Elektrodenanordnung (100), umfassend:
eine Kathodenplatte (110),
eine Anodenplatte (130), welche der Kathodenplatte (110) entspricht, und
erste und zweite Separatoren (120a, 120b), welche benachbart zueinander angeordnet sind, wobei die Kathodenplatte (110) oder die Anodenplatte (130) dazwischen angeordnet ist,
wobei wenigstens ein Ende des ersten Separators (120a) an wenigstens einem Ende des zweiten Separators (120b) entlang der longitudinalen Richtung der Kathodenplatte (110) und der Anodenplatte (130) haftet,
wobei das wenigstens eine Ende des ersten Separators (120a) und das wenigstens eine Ende des zweiten Separators (120b) derart gefaltet sind, dass sie die Kathodenplatte (110) oder die Anodenplatte (130) umhüllen,
wobei die Elektrodenanordnung (100) ferner ein Isolierband (140) umfasst, welches den gefalteten Teil des ersten Separators (120a) und den gefalteten Teil des zweiten Separators (120b) bedeckt, und
wobei das mindestens eine Ende des ersten Separators (120a) und das mindestens eine Ende des zweiten Separators (120b), welche aneinander haften, doppelt gefaltet sind.

2. Elektrodenanordnung (100) nach Anspruch 1, wobei jede der Kathodenplatte (110) und der Anodenplatte (130) jeweils umfasst:
einen Elektrodenstromkollektor;
eine Elektrodenaktivmaterialschicht, welche an dem Elektrodenstromkollektor gebildet ist; und
einen Elektrodenstreifen (115, 135), welcher derart gebildet ist, dass er von dem Elektrodenstromkollektor heraussteht.

3. Elektrodenanordnung (100) nach Anspruch 1, wobei der erste und zweite Separator (120a, 120b) eine Breite aufweisen, welche größer ist als diejenige der Kathodenplatte (110) und der Anodenplatte (135).

4. Elektrodenanordnung (100) nach Anspruch 1, wobei der erste und zweite Separator (120a, 120b) an der zugewandten Kathodenplatte (110) oder der zugewandten Anodenplatte (130) haften.

5. Elektrodenanordnung (100) nach Anspruch 1, wobei beide Enden des ersten Separators (120a) an beiden Enden des zweiten Separators (120b) entlang der longitudinalen Richtung der Kathodenplatte (110) und der Anodenplatte (130) haften, und
beide Enden des ersten Separators (120a) und beide Enden des zweiten Separators (120b) derart gefaltet sind, dass sie die Kathodenplatte (110) oder die Anodenplatte (130) umhüllen.

6. Elektrodenanordnung (100) nach Anspruch 1 oder 2, wobei das Isolierband (140) derart ausgebildet ist, dass es die Kathodenplatte (110) und die Anodenplatte (130) entlang einer Breitenrichtung senkrecht zu der longitudinalen Richtung umhüllt, während es den gefalteten Teil des ersten Separators (120a) und den gefalteten Teil des zweiten Separators (120b) bedeckt.

7. Elektrodenanordnung (100) nach Anspruch 2, wobei das Isolierband (140) derart gebildet ist, dass es ferner die Kathodenplatte (110) und die Anodenplatte (130) um die Elektrodenlasche (115) herum umhüllt.

8. Sekundärbatterie, umfassend:
die Elektrodenanordnung (100) nach einem der Ansprüche 1 bis 7 und ein Batteriegehäuse zum Aufnehmen der Elektrodenanordnung (100).

9. Sekundärbatterie nach Anspruch 8, wobei das Batteriegehäuse ein Pouch-Typ-Batteriegehäuse oder ein prismatisches Batteriegehäuse ist.

## Revendications

1. Ensemble électrode (100) comprenant :
une plaque de cathode (110),
une plaque d'anode (130) correspondant à la plaque de cathode (110), et
des premier et deuxième séparateurs (120a, 120b) qui sont disposés adjacents l'un à l'autre avec la plaque de cathode (110) ou la plaque d'anode (130) interposée entre eux,
dans lequel au moins une extrémité du premier séparateur (120a) est collée à au moins une extrémité du deuxième séparateur (120b) le long de la direction longitudinale de la plaque de cathode (110) et de la plaque d'anode (130),
dans lequel l'au moins une extrémité du premier séparateur (120a) et l'au moins une extrémité du deuxième séparateur (120b) sont pliées de façon à envelopper la plaque de cathode (110) ou la plaque d'anode (130),
dans lequel l'ensemble électrode (100) comprend en outre un ruban isolant (140) recouvrant la partie pliée du premier séparateur (120a) et la partie pliée du deuxième séparateur (120b), et
dans lequel l'au moins une extrémité du premier séparateur (120a) et l'au moins une extrémité du deuxième séparateur (120b) collées l'une à l'autre sont doublement pliées.

2. Ensemble électrode (100) selon la revendication 1, dans lequel chacune de la plaque de cathode (110) et de la plaque d'anode (130) comprend,
un collecteur de courant d'électrode ;
une couche de matériau actif d'électrode formée sur le collecteur de courant d'électrode ; et
une patte d'électrode (115, 135) formée de façon à faire saillie à partir du collecteur de courant d'électrode.

3. Ensemble électrode (100) selon la revendication 1, dans lequel les premier et deuxième séparateurs (120a, 120b) ont une largeur supérieure à celle de la plaque de cathode (110) et de la plaque d'anode (135).

4. Ensemble électrode (100) selon la revendication 1, dans lequel les premier et deuxième séparateurs (120a, 120b) sont collés à la plaque de cathode (110) opposée ou à la plaque d'anode (130) opposée.

5. Ensemble électrode (100) selon la revendication 1, dans lequel les deux extrémités du premier séparateur (120a) sont collées aux deux extrémités du deuxième séparateur (120b) le long de la direction longitudinale de la plaque de cathode (110) et de la plaque d'anode (130), et
les deux extrémités du premier séparateur (120a) et les deux extrémités du deuxième séparateur (120b) sont pliées de façon à envelopper la plaque de cathode (110) ou la plaque d'anode (130).

6. Ensemble électrode (100) selon la revendication 1 ou 2, dans lequel le ruban isolant (140) est formé de façon à envelopper la plaque de cathode (110) et la plaque d'anode (130) le long d'une direction de largeur perpendiculaire à la direction longitudinale, tout en recouvrant la partie pliée du premier séparateur (120a) et la partie pliée du deuxième séparateur (120b).

7. Ensemble électrode (100) selon la revendication 2, dans lequel le ruban isolant (140) est formé de façon à envelopper en outre la plaque de cathode (110) et la plaque d'anode (130) autour de la patte d'électrode (115).

8. Batterie secondaire comprenant :
l'ensemble électrode (100) selon l'une quelconque des revendications 1 à 7, et
un boîtier de batterie pour loger l'ensemble électrode (100).

9. Batterie secondaire selon la revendication 8, dans laquelle le boîtier de batterie est un boîtier de batterie de type poche ou un boîtier de batterie prismatique.
